# EUROPEAN PATENT APPLICATION

(11) **EP 2 662 610 A1**
(43) Date of publication of application: **13.11.2013**
(21) Application number: 11818966.1
(22) Date of filing: 09.09.2011
(51) Int. Cl.: F21S 2/00, F21V 9/04, F21V 29/02, F21Y 101/00

(54) **SIMULATED SOLAR RADIATION DEVICE**

(30) Priority: 07.01.2011 JP 2011001715
(71) Applicant: Sharp Kabushiki Kaisha, Osaka-shi Osaka 545-8522 (JP)
(72) Inventor: MINAMI, Kohji, Osaka 545-8522 (JP)
(74) Representative: Müller - Hoffmann & Partner
(86) International application number: PCT/JP2011/070649
(87) International publication number: WO 2012/093508

(57) **Abstract**

A pseudo sunlight emitting device includes a first light source for emitting first light having a certain spectral distribution; a first light guide member for receiving, at its light incident surface, the first light from the first light source, and for emitting, via its light emission surface, light having a controlled directivity; a first optical filter for adjusting a spectrum of the light emitted from the first light guide member; a second light source for emitting second light whose accumulative irradiance in an infrared wavelength region is greater than an accumulative irradiance of a wavelength region of light shorter in wavelength than infrared light; second light guide members for receiving, at their light incident surfaces, the second light from the second light source, and for emitting, via their light emission surfaces, light having a controlled directivity; a second optical filter(s) for adjusting a spectrum of the light emitted from the second light guide member, a number of the second light guide members being greater than that of the first light guide member by n times, where n is a natural number not less than 2.

## Description

### Technical Field

The present invention relates to a pseudo sunlight emitting device for emitting pseudo sunlight.

### Background Art

Recently, solar cell panels have been improved to have large sizes, thereby leading to growing demands for a device capable of emitting artificial light (pseudo sunlight) being similar to sunlight. In particular, rapid development and wide spread of solar cell technology especially increases demands for devices that can be utilized for inspection, measurement, and experiment of solar cells by being capable of radiating highly accurate pseudo sunlight to a large area.

Main features pseudo sunlight should satisfy are that the pseudo sunlight should have emission spectrum similar to that of standard sunlight (stipulated by Japanese Industrial Standard), and that the pseudo sunlight should have illuminance similar to that of the standard sunlight.

Especially, solar cell panels having a two-layered type (tandem structure) or a three-layered type (triple structure) are structured such that solar cells having different spectral sensitivities are connected in series inside the solar cell panels. Therefore, each layer of the solar cell panels having such structures are configured to generate power in different wavelength regions. Consequently, evaluation of power generating capacity of such a solar cell panel should be carried out by evaluating output characteristics that the solar cell panel shows when the solar cell panel receives light having spectrum similar to sunlight.

Conventionally, light emitting devices capable of reproducing a spectral distribution of sunlight highly accurately have been developed. Patent Literature 1 discloses a light guide applicable to various types of pseudo sunlight emitting devices, and a light emitting device using the light guide.

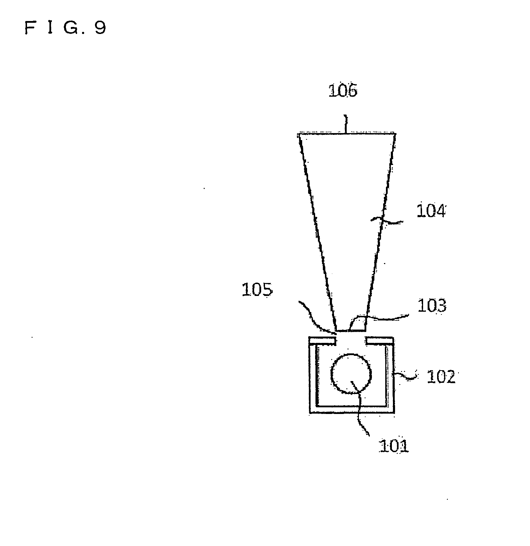

Fig. 9 is a cross sectional view schematically illustrating a light source device disclosed in Patent Literature 1. A conventional light emitting device 100 is configured such that a substantially point light source 101, which is a lamp light source, is provided inside a reflection box 102 each of whose inner walls is covered with a silver reflection surface, and which has, on a surface thereof, a pin hole-like aperture section 103. A light guide 104, which is the light guide mentioned above, is provided on the aperture. The light guide 104 has a light incident edge surface and a light emitting edge surface, and the light incident edge surface is smaller in area than the light emitting edge surface.

Light emitted from the lamp light source 101 is reflected several times inside the reflection box 102, and then emitted outside via the aperture section 103, so as to reach the light incident edge surface 105 of the light guide 104. The light thus entered into the light guide 104 propagate gradually toward the light emitting edge surface 106, while being repeatedly reflected inside the light guide 104 by total reflection. Along with propagating toward the light emitting edge surface 106 by total reflection, the light is gradually converted into a light beam perpendicular to the light emitting edge surface 106. Consequently, the light guide 104 emits such a light beam perpendicular to the light emitting edge surface 106. In this way, it is possible to obtain emission light having a high directivity independent of light output characteristic of the light source.

With this device, use of a plurality of light guide members makes it possible to obtain highly directional light more efficiently. Moreover, the use of the light source device makes it possible to enter light, whose directivity is controlled, into an optical filter. This makes it possible to obtain pseudo sunlight having emission spectrum as desired.

### Citation List

### Patent Literature

Patent Literature 1
Japanese Patent Application Publication, Tokukai, No. 2003-098354 A.

### Summary of Invention

### Technical Problem

However, Patent Literature 1 uses a light guide capable of high efficiently emitting highly directional light. This makes it possible to control the directivity of the light emitted from the light guide. Meanwhile, because the lamp light source is provided near the light guide, heat from the lamp light source increase temperature of the light guide, especially when the lamp light source is a heat source such as one for halogen light.

In such a case, if the light guide is made from glass and has a large size, cooling the light guide would face a difficulty in cooling a center portion of the light guide even though the temperature of the light guide is highest at the center portion. This would cause heat accumulation at the center portion, thereby causing heat stress thereon. Such heat stress would possibly crack the glass of the light guide. This problem can be solved by making the light guide from a heat-resistant glass material. Because pseudo sunlight emitting devices use a plurality of light guides, this solution means that all of the light guides need to be made from heat-resistant glass that is expensive in material cost. Moreover, if all infrared light is radiated onto the solar cell panel, the solar cell panel is heated to a unnecessarily high temperature. Therefore, it is necessary to reduce the infrared light from the light before the light is radiated to the solar cell panel. The heat-resistant light, however, is relatively poor in infrared absorption, compared with general glass materials. Thus, it is necessary to provide the solar cell panel additionally with an optical element or the like member for removing the infrared light.

The present invention is made in view of the aforementioned problem, and an object of the present invention is to provide a pseudo sunlight emitting device, which is low in cost by preventing glass cracking without making a light guide member from heat-resistant glass or the like.

### Solution to Problem

In order to attain the object, a pseudo sunlight emitting device according to the present invention is a pseudo sunlight emitting device including a first light source for emitting first light having a certain spectral distribution; a first light guide member for receiving, at its light incident surface, the first light from the first light source, and for emitting, via its light emission surface, light having a controlled directivity; a first optical filter for adjusting a spectrum of the light emitted from the first light guide member; a second light source for emitting second light whose accumulative irradiance in an infrared wavelength region is greater than an accumulative irradiance of a wavelength region of light shorter in wavelength than infrared light; second light guide members for receiving, at their light incident surfaces, the second light from the second light source, and for emitting, via their light emission surfaces, light having a controlled directivity; a second optical filter(s) for adjusting a spectrum of the light emitted from the second light guide member, a number of the second light guide members being greater than that of the first light guide member by n times, where n is a natural number not less than 2.

With this configuration, the pseudo sunlight emitting device according to the present invention can be configured such that each second light guide member is smaller in width (minor-axis dimension) and length (major-axis dimension) than the first light guide member. Because of this, a temperature rise in the second light guide members due to a heat-ray component in the second light can be alleviated. Moreover, if the location of the second light guide members is a factor of determining a size of the pseudo sunlight emitting device, this configuration can reduce a foot print of the pseudo sunlight emitting device.

For a fuller understanding of the nature and advantages of the invention, reference should be made to the ensuing detailed description taken in conjunction with the accompanying drawings.

### Advantageous Effects of Invention

As described above, the pseudo sunlight emitting device of the present invention can attain efficient heat release of the light guide members, thereby reducing the temperature rise of the light guide members. Therefore, the pseudo sunlight emitting device of the present invention can avoid cracking of the glass of the light guide members and does not need use of expensive heat-resistant glass for avoiding cracking of the glass of the light guide members.

### Brief Description of Drawings

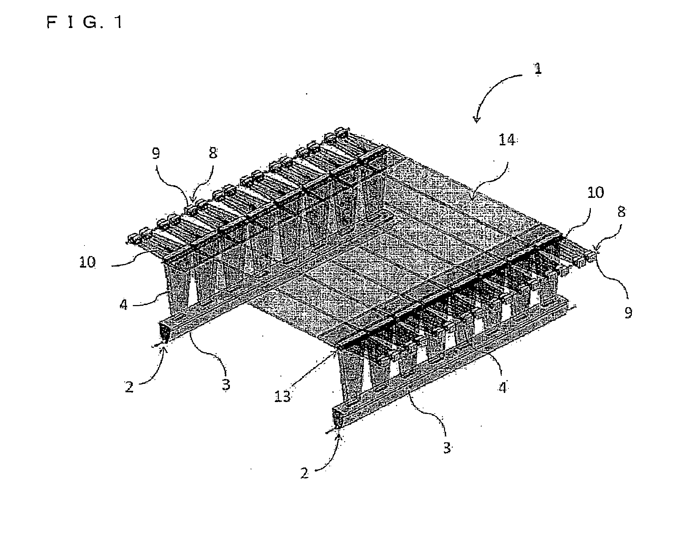

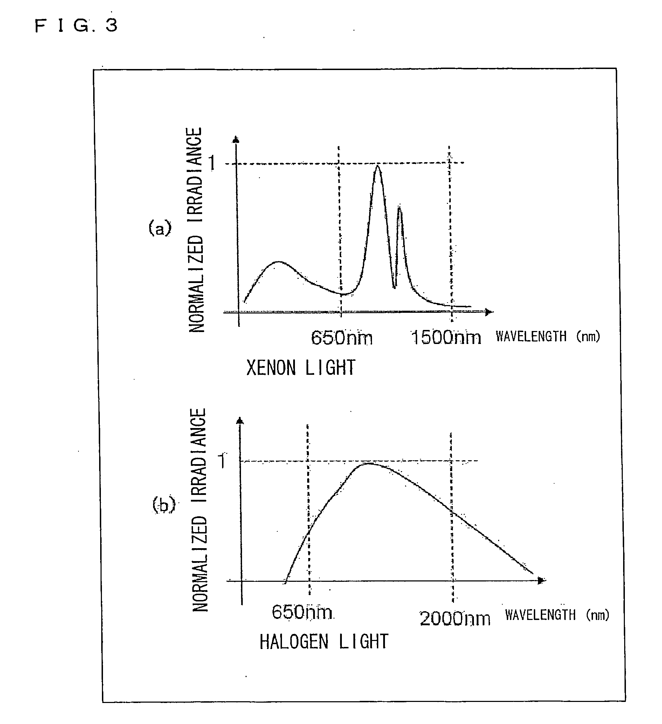

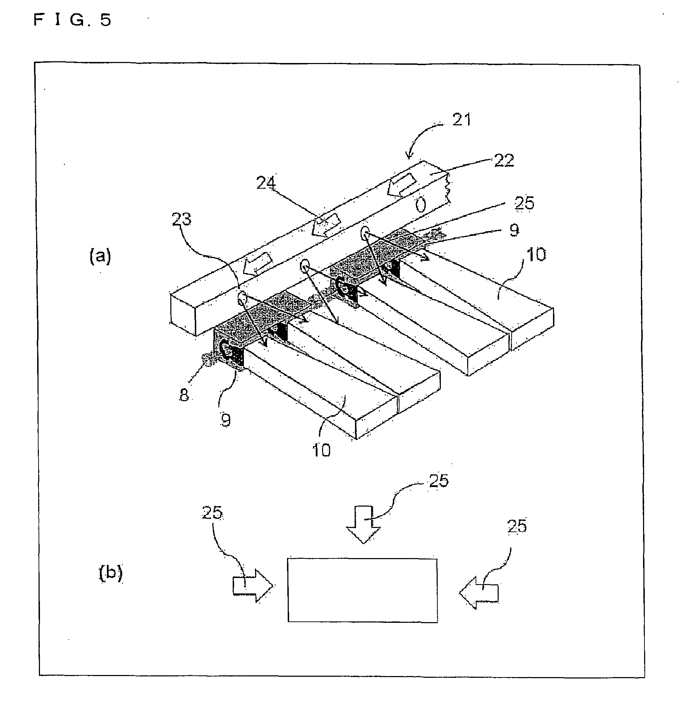

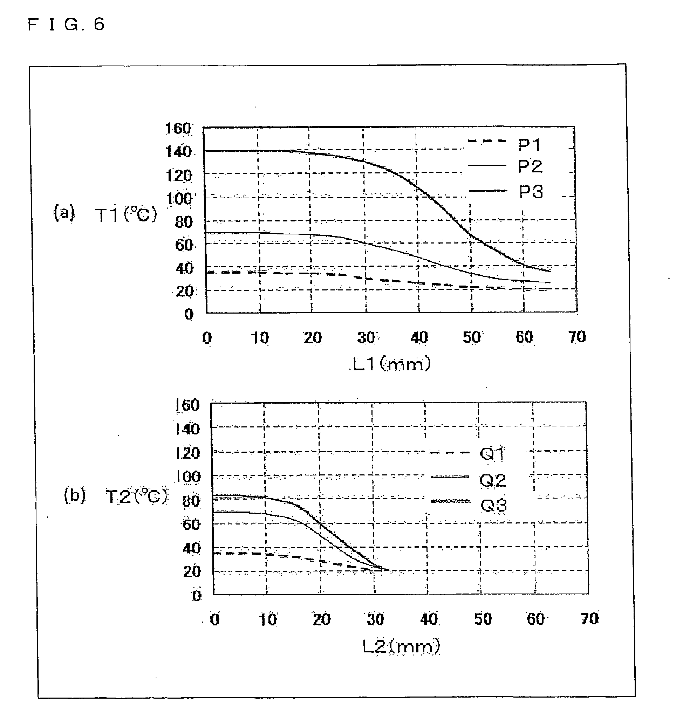

Fig. 1 Fig. 1 is a perspective view illustrating a main structure of a pseudo sunlight emitting device according to one embodiment of the present invention.
Fig. 2

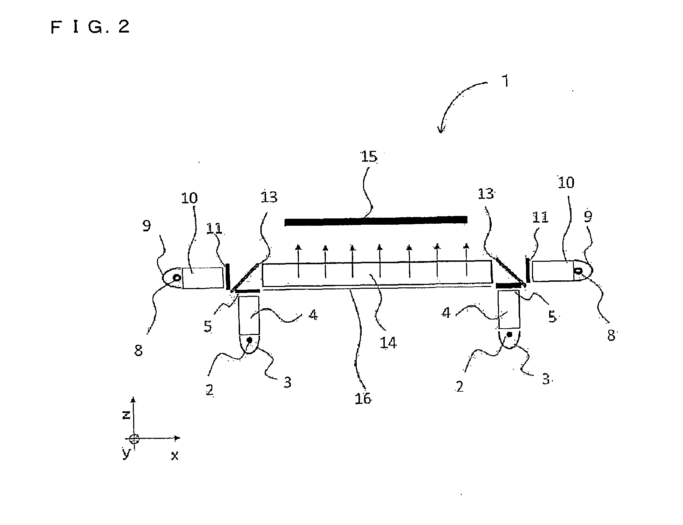

   Fig. 2 is a vertical cross sectional view schematically illustrating one example of the main structure of the pseudo sunlight emitting device of Fig. 1.
Fig. 3
   (a) of Fig. 3 is a view plotting irradiance against wavelength of a xenon lamp, and (b) of Fig. 3 is a view plotting irradiance against wavelength of a halogen lamp.
Fig. 4

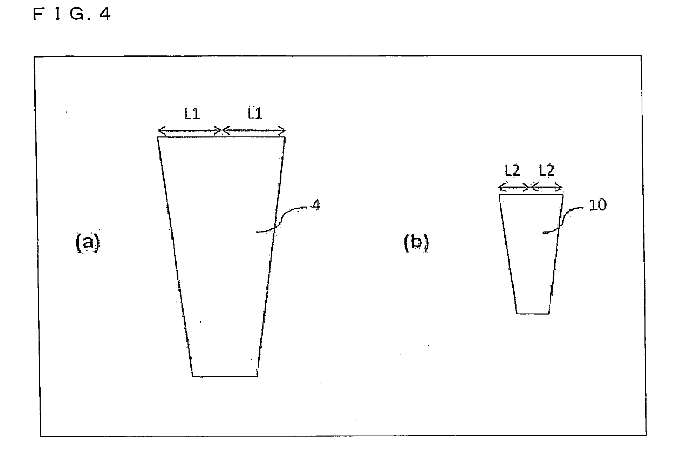

   Fig. 4 is a view illustrating structures of taper couplers.
Fig. 5
   (a) of Fig. 5 is a view illustrating a configuration of a cooling device, and (b) of Fig. 5 is a view illustrating how a cooling winds are blown to the taper coupler shown cross-sectionally.
Fig. 6
   (a) of Fig. 6 is a graph illustrating temperature dependency of a first light guide (taper coupler 4) for halogen light, and (b) of Fig. 6 is a graph illustrating temperature dependency of a second light guide (taper coupler 10) for halogen light.
Fig. 7

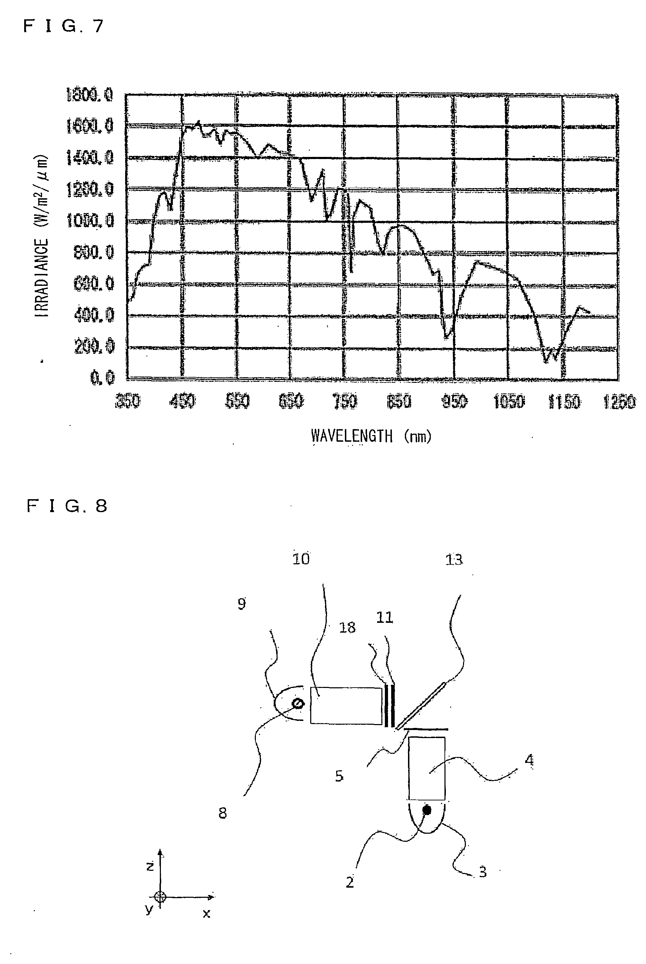

   Fig. 7 is a view illustrating a standard sunlight spectrum, which the pseudo sunlight aims to.
Fig. 8
   Fig. 8 is a block diagram illustrating a configuration further provided with a third optical filter.
Fig. 9
   Fig. 9 is a view illustrating a light emitting device disclosed in Patent Literature 1.

### Description of Embodiments

In the following, one embodiment of the present invention is described in more details, referring to drawings. Firstly, a pseudo sunlight emitting device 1 for emitting pseudo sunlight to a illumination surface 15 is described in more detail, referring to Figs. 1 and 2. Pseudo sunlight is a kind of artificial light has an emission spectrum very similar to an emission spectrum of natural light (sunlight). The pseudo sunlight emitting device 1 emits synthetic light synthesized from xenon light and halogen light. The illumination surface 15 is provided with, for example, a solar cell. It should be noted that the constituent members in the drawings are illustrated with the dimensions such as thickness and lengths just for illustrative purposes, and the present invention is not limited to such dimensions as illustrated in the drawings. Moreover, in the drawings of the present invention, the like reference numerals are given to identical or like members.

Fig. 1 is a perspective view illustrating a main structure of a pseudo sunlight emitting device 1 according to one embodiment of the present invention. Fig. 2 is a vertical cross sectional view schematically illustrating one example of the main structure of the pseudo sunlight emitting device of Fig. 1.

As illustrated in Figs. 1 and 2, the pseudo sunlight emitting device 1 includes a xenon light source (first light source), a halogen light source 8 (second light source), a reflector 3, a reflector 9, a taper coupler 4 (first light guide), a taper coupler 10 (second light guide), an air mass filter 5 (first optical filter), an air mass filter 11 (second optical filter), light mixing sections 13, and a light guide member 14. The xenon light source 2 is configured to emit first light. The halogen light source 8 is configured to emit second light. The reflectors 3 and 9 have reflective inner surfaces and are configured to contain the xenon light source 2 and the halogen light source 8 inside their inner surfaces, respectively. The taper coupler 4 and the taper coupler 10 serve as control means for controlling directivities of the first light of the xenon light source 2 and the second light of the halogen light source 8, respectively. The air mass filter 5 is configured to perform spectrum adjustment for filtering the first light of the xenon light source 2, thereby obtaining a shorter-side wavelength light. The air mass filter 11 is configured to perform spectrum adjustment for filtering the second light of the second light source, thereby obtaining a longer-side wavelength light. The light mixing sections 13 serve as reflection/transmission means configured to perform light mixing by reflecting the short wavelength xenon emission light from the air mass filter 5 but allowing the long wavelength halogen emission light from the air mass filter 11 to pass therethrough. By the light mixing, the light mixing sections 13 produce pseudo sunlight similar to sunlight. The light mixing sections 13 may be a wavelength selective mirror (or wavelength mixing mirror), for example. The light guide member 14 receives, at one edge thereof, the pseudo sunlight from the light mixing sections 13. The light guide member 14 converts the pseudo sunlight, which is diffusive light, into highly directional light by causing the pseudo sunlight to propagate inside the light guide member 14. Then, the light guide member 14 performs surface illumination to evenly radiate the highly directional light over the illumination surface 15 on which a solar cell panel or the like is provided, for example.

The xenon light source 2 is provided inside the reflector 3 and is configured to emit the xenon light (first light) having a predetermined emission spectrum. In the present embodiment, the xenon light source 2 is a xenon lamp having a bar-like (linear) shape. The xenon light source 2 may be one or plural. The reflector 3 has a partially oval cross-sectional shape, and has an apertured plate on its front side. The apertured plate has aperture sections with predetermined intervals. The light emitted from the xenon light source 2 is reflected on the inner surfaces of the reflector 3, thereby being converged. As a result, more directional xenon light is emitted out via the aperture sections 3. The reflector 3 introduces the more directional xenon light to a lower edge surface of the taper coupler 4 serving as a taper light guide member.

For illuminating the pseudo sunlight over a large area, a light source of high output is necessary. Meanwhile, if the device is implemented in a line (process) of a factory, it is required that the light source have a long life, in order to reduce burden of maintenance such as replacing the light source. In general, xenon light sources of high output and long life have bar-like shape and are diffusive light sources for emitting non-directional light. The reflector 3 is used to give directivity to such a bar-shaped light source, but is only able to achieve directivity with particular diffusion angles. The diffusion angles can be reduced to almost zero if the device is a large-size device capable of converting the light into parallel light. However, if the device is realized as a small-size device, it is inevitable that the light converted by the reflector 3 have the particular diffusion angles. The particular diffusion angles significantly affect the optical filter. Therefore, it is necessary to reduce the diffusion angles of the light as much as possible before the light enters the optical filter. In the present invention, the reflectors and the taper couplers are used to down regulate the diffusion angles.

On the other hand, the halogen light source 8 is provided inside the reflector 9, and is configured to emit halogen light (second light) having a particular emission spectrum. The light emitted from the halogen light source 8 is reflected on the inner surfaces of the reflector 9, thereby being converged. As a result, more directional halogen light is emitted out from a light emission surface. The reflector 9 introduces the more directional halogen light to a lower edge surface of the taper coupler 10 serving as a taper light guide member.

Moreover, the halogen light source has a filament-like shape and is a non-directional diffusive light source, like the xenon light source. In order to give directivity to the light source of filament-like shape, the reflector and the taper coupler are used to down regulate the diffusion angles.

In the present embodiment, the halogen light source 8 includes two halogen lamps arranged as a double-filament shape. The two halogen lamps are provided with the taper couplers 10, respectively. The taper coupler 10 for controlling the directivity of the halogen light is substantially similar to the taper coupler 4 in terms of their shape, but a surface area of the taper coupler 10 is substantially 1/4 of that of the taper coupler 4. The reason for this configuration will be explained later in more detail. In short, halogen light is a heat source, therefore, if the taper coupler is made from glass and is large in size, the cooling the taper coupler for the halogen light has a difficulty to cool a center section and its vicinity of the taper coupler due to radiant heat of the halogen light and absorption heat of the halogen light propagating inside the taper coupler, even though temperature in the center section and its vicinity is highest in the taper coupler. In such a case, consequent heat accumulation in the center section would apply heat stress on the glass and would possibly crack the glass in the end.
(a) of Fig. 3 is a view plotting irradiance against wavelength of a xenon lamp, and (b) of Fig. 3 is a view plotting irradiance against wavelength of a halogen lamp. Accumulated irradiance is accumulation of irradiance of the lamp from a given wavelength to a given wavelength. In the halogen lamp, accumulated irradiance of an infrared wavelength region is greater than accumulated irradiance of a wavelength region of light having shorter wavelengths than infrared light.

As illustrated in (a) of Fig. 3, the emission light from the xenon lamp is constituted mainly by light in a wavelength region corresponding to a visible light and ultraviolet light of sunlight. Thus, in the emission light from the xenon lamp, a heat-ray component contributing to a temperature rise is less than that of the halogen light. Meanwhile, as illustrated in (b) of Fig. 3, the emission light from the halogen lamp is constituted mainly by light in a wavelength region corresponding to infrared light of sunlight. Thus, in the emission light from the halogen lamp, the heat-ray component contributing to a temperature rise is large. Therefore, the temperature of the taper coupler 10 for controlling the halogen light is more easily increased than that of the taper coupler 4 for controlling the xenon light.

Next, configurations of the taper coupler 4 and the taper coupler 10 are explained below. (a) of Fig. 4 illustrates a configuration of the taper coupler 4 and (b) of Fig. 4 illustrates a configuration of the taper coupler 10. In the present embodiment, the taper coupler 4 has a width (minor-axis dimension) of 150 mm, a length (major-axis dimension) of 480 mm, and a taper angle of 7°. The taper coupler 10 has a width (minor-axis dimension) of 75 mm, a length (major-axis dimension) of 240 mm, and a taper angle of 7°. That is, the taper coupler 10 is 1/2 in width and length and substantially 1/4 in surface area, compared with the taper coupler 4, thereby being similar to the taper coupler 4 in shape.

As illustrated in Fig. 4, the taper coupler 4 is configured as a light guide member whose width (minor-axis dimension) is gradually increased from one edge (light incident surface) and to another edge (light emission surface). The xenon light entering the incident surface of the taper coupler 4 has been converged to some extent by the reflector 3, but still has diffusion angles ranging widely. However, the range of the diffusion angles of the light is narrowed down into a certain range while the light propagates inside the taper coupler 4. As a result, the diffusion angle of the light is down regulated as much as possible.

The taper coupler 10 is also configured as a light guide member whose width (minor-axis dimension) is gradually increased from one edge (light incident surface) and to another edge (light emission surface). The halogen light entering the incident surface of the taper coupler 10 has been converged to some extent by the reflector 9, but still has diffusion angles ranging widely. However, the range of the diffusion angles of the light is narrowed down into a certain range while the light propagates inside the taper coupler 10. As a result, the diffusion angle of the light is down regulated as much as possible.

In the present embodiment, the light guide member 14 serving as light illuminating means is configured to perform surface illumination of the diffusion light emitted from the light mixing sections 13. The synthetic light whose directivity is controlled is emitted from the light mixing sections 13 and then guided into the light guide member 14. The light incident on the light guide member 14 propagates inside the light guide member 14 while being repeatedly reflected on outer walls by total reflection. Moreover, the light guide member 14 contains scatterers on its surface for example. The light incident on the light guide member 14 hits the scatterers during the propagation inside the light guide member 14. The light hit the scatterers is refracted or reflected by the scatterers so as to have a propagation angle out of total reflection condition under the Snell's law, thereby being emitted outside the light guide member 14. This makes it possible for the pseudo sunlight emitting device 1 to emit to the illumination surface 15 the xenon light and the halogen light having passed through different optical systems but both having controlled directivities. As above, the light guide member has functions of propagating the incident light inside thereof, and emitting the light outside thereof by the scatterers provided on its surface.

The scatterers may be (i) printed structures including scatterers formed by printing fine patterns on the surface of the light guide member 14, (ii) scatterers formed as grooves formed on the surface of the light guide, or (iii) the like. The light propagating inside the light guide member 14 hits the printed scatterers, which scatter the light by the scatterers formed inside thereof. The light thus scattered is emitted out of the light guide member 14. The scatterers may not be the printed scatterers, and may be a scattering surface formed by microfabricating a surface of the light guide by using a laser or the like. Further, the scatterers may be scatterers for causing the light to be emitted out of the light guide member 14 simply by reflection effect or refraction effect, like groove-shaped scatterers for example. That is, the scatterers may have any configuration, provided that the scatterers can change a traveling direction of the light propagating inside the light guide member 14 so as to break the total reflection condition and thereby to cause the light to be emitted out of the light guide member 14.

Next, a cooling device 21 is explained below, referring to Fig. 5. The cooling device 21 is provided in the vicinity of the halogen light source 8 in order to provide efficient heat release of radiant heat and absorption heat provided from the halogen light to the taper couplers 10. The cooling device 21 is of air-cooled type. Fig. 5 is a view illustrating the configuration of the cooling device provided in the vicinity of the halogen light source 8 of the pseudo sunlight emitting device.

In the present embodiment, a blast pipe 22 is provided in the vicinity of the halogen light source 8 as illustrated in Fig. 5. Inside the blast pipe 22, a cooling air flows (see the Arrow 24). The blast pipe 22 has air distributing apertures 23 via which the cooling air flows to the taper couplers 10 (see Arrow 25).

The cooling air abuts against surfaces of the taper couplers 10, thereby cooling the taper couplers 10. The air distributing apertures 23 opened toward the taper couplers 10 is preferably positioned between adjacent taper couplers 10. In the present embodiment, only one air distributing aperture 23 is provided between adjacent taper couplers 10. However, a plurality of the air distributing apertures 23 may be provided between adjacent taper couplers 10, and how many the air distributing apertures 23 are provided between adjacent taper couplers 10 can be decided, considering how much airflow should be provided to the taper couplers 10.

For the sake of efficient heat release of the taper coupler 10, it is preferable to blow the cooling air to the center section of the taper coupler 10 from as many directions as possible, which center section tends to be heated up by the adsorption heat due to high intensity of light. In the present embodiment, the air distribution apertures 23 are provided respectively in each interval between the taper couplers 10. As illustrated in (b) of Fig. 5, the cooling air is blown to the taper coupler from 3 directions (from top, right, and left), thereby making it possible to cool the taper coupler 10 almost isotropically. Further, it is preferable that the cooling air is blown to abut the light incident surface or the vicinity thereof the taper coupler 10. The adsorption heat of the halogen light is increased from the light incident surface toward the light emission surface along the gradual increase in the width (minor-axis dimension) of the taper coupler 10. However, the influence of the radiant heat of the halogen light source 8 on the taper coupler 10 is greater at a position closer to the light incident surface, because such a position closer to the light incident surface is closer to the halogen light source 8 while a position closer to the light emission surface is farther from the halogen light source 8. Therefore, it is preferable that the cooling air is blown to abut the light incident surface or the vicinity thereof the taper coupler 10, because such a position closer to the light incident surface tends to be heated up by being largely influenced by the halogen light source 8. By blowing the cooling air to the surface of the taper coupler 10, it is possible to homogenize the temperature distribution along the width direction and the length direction, thereby making it possible to avoid the risk that the taper coupler 10 is broken by heat stress occurred inside the glass of the taper coupler 10.

The smaller the taper coupler 10 in size, the more efficient the heat release. Moreover, it is preferable to blow the cooling air to the reflector 3 apart from the taper coupler 10. This is because the reflector 3 is positioned close to the halogen light source and is therefore easily heated up.

Here, how the taper coupler is affected by the cooling effect of the cooling air from the cooling device and by the heating effect by the radiant heat and the adsorption heat caused by the halogen light. (a) of Fig. 6 is a graph illustrating temperature dependency of the taper coupler 4 for halogen light, and (b) of Fig. 6 is a graph illustrating temperature dependency of the taper coupler 10 for halogen light.
(a) of Fig. 6 illustrates temperature distributions P1, P2, and P3 along a distance L1 (mm) from the center section of the taper coupler 4, where T1 (°C) is the temperature of the taper coupler 4 at the distance L1 in case the halogen light source 8 was turned on a given number of times. The distance L1 = 0 corresponds to the center section of the taper coupler 4. The temperature distributions P1, P2, and P3 are results of this experiment carried out by turning on the halogen light source 8 twenty five (25) times, fifty (50) times, and one hundred fifty times (150), respectively.

As understood from the temperature distributions P1, P2, and P3 in (a) of Fig. 6, the temperature of the taper coupler 4 is lowered as the distance L1 becomes greater (i.e., becomes farther from the center section). Moreover, the temperature of the taper coupler 4 is becomes higher when the halogen light source 8 is turned on more times. Furthermore, a temperature difference between the center section and a surface section becomes greater when the halogen light source 8 is turned on more times.

The heating effect of the halogen light is greater when the halogen light source 8 is turned on with shorter intervals. Thus, the cooling of the taper coupler 4 cannot cool the center section so efficiently, thereby allowing the center section to be heated up with linear temperature rise. Meanwhile, the cooling effect of the cooling air is high on the surface section, whereby the temperature of the surface section is not increased so significantly even if the halogen light source 8 is turned on with shorter intervals. This is the reason why the temperature difference between the center section and the surface section becomes greater when the halogen light source 8 is turned on more times.

This leads to such a phenomenon that the temperature is distributed inside the glass with a greater temperature difference, as illustrated in (a) of Fig. 6, and the temperature of the center section of the taper coupler 4 does not reach equilibrium. If the temperature inside the glass is kept unbalanced as such for a long time, the risk for breaking the glass due to the heat stress inside the glass is increased.
(b) of Fig. 6 illustrates temperature distributions Q1, Q2, and Q3 along a distance L2 (mm) from the center section of the taper coupler 10, which is smaller in size than the taper coupler 4, where T2 (°C) is the temperature of the taper coupler 10 at the distance L2 in case the halogen light source 8 was turned on a given number of times. The distance L2 = 0 corresponds to the center section of the taper coupler 10. The temperature distributions Q1, Q2, and Q3 are results of this experiment carried out by turning on the halogen light source 8 five (5) times, ten (10) times, and thirty (30) times, respectively.

As understood from the temperature distributions Q1, Q2, and Q3 in (b) of Fig. 6, the temperature of the taper coupler 10 is gradually decreases as the distance L2 is increased from 0. Moreover, as in the case of (a) of Fig. 6, the temperature of the taper coupler 10 is increased and a temperature difference between the center section and a surface section of the taper coupler 10 becomes greater, when the halogen light source 8 is turned on more times.

The taper coupler 10 is smaller than the taper coupler 4 and is 1/2 in width and length and substantially 1/4 in surface area, compared with the taper coupler 4. Thus, a smaller increase in the number of times to turn on the halogen light source 8 can increases the temperature of the taper coupler 10 more significantly. However, the comparison of the temperature distributions Q1, Q2, and Q3 shows that the rise in the temperature of the center section between the case of turning on the halogen light source 8 ten (10) times and the case of turning on the halogen light source 8 thirty (30) times is much smaller than the rise in the temperature of the center section between the case of turning on the halogen light source 8 five (5) times and the case of turning on the halogen light source 8 ten (10) times. The relatively small size of the taper coupler 10 makes it faster to increase the temperature of the taper coupler 10 by the heating effect of the halogen light, but also makes it faster to cool the taper coupler 10 by the cooling effect of the cooling air. Thus, it will not occur that only the temperature of the center section is increased linearly. Instead, the heating effect of the halogen light, which has been reinforced by the increase in the number of times to turn on the halogen light source 8, and the cooling effect of the cooling air reach a substantial equilibrium to keep the temperature of the taper coupler 10 around a certain temperature.

Consequently, as shown in (b) of Fig. 6, the temperature difference having become larger inside the glass along the increase in the number of times to turn on the halogen light source 8 reaches its equilibrium at a constant temperature, thereby making it possible to avoid the risk that the glass is broken by the heat stress inside the glass.

As described above, in case the taper coupler 10 is relatively small in size so that the cooling effect of the cooling air is high, the risk of breaking the glass can be avoided. If the taper coupler 10 is made from a glass material (float glass, general optical glass BK7 or the like) that absorbs infrared light of wavelength of 1200 nm or greater, it is possible to emit pseudo sunlight in which a main heat-ray component in the halogen light is reduced, thereby making it possible to prevent the temperature increase in the solar cell panel to which the pseudo sunlight is illuminated.

Here, the pseudo sunlight emitting device in the present embodiment is capable of producing pseudo sunlight similar to sunlight by light mixing to mix (i) the short wavelength-side light produced by filtering the xenon light and (ii) the long wavelength-side light produced by filtering the halogen light. Fig. 7 illustrates spectrum of the standard sunlight, which the pseudo sunlight aims to.

According to Fig. 7, it can be understood that the standard sunlight is such that the infrared light of 1200 nm or greater on the long wavelength side is small in irradiance and does not make much contribution to improvement of spectral conformity (a ratio indicating how much the spectrum of the pseudo sunlight is conform with the standard sunlight) of the pseudo sunlight. The infrared light is mainly a heat-ray component, and causes a problem that it heats up the solar cell panel to an unnecessarily high temperature if the infrared light is irradiated on the solar cell panel. If the taper coupler 10 is made from a glass material absorbing the heat-ray component in the infrared light so as to absorb, as much as possible, the infrared light of 1200 nm or greater in wavelength from the halogen light in propagating the taper coupler 10, it is possible to prevent the solar cell panel from being heated up to an unnecessarily high temperature. Even if the infrared light is removed from the halogen light as such, the spectrum conformity of the pseudo sunlight will not be reduced.

Further, the pseudo sunlight emitting device 1 may be provided with a heat-ray cutting filter 18 (third optical filter) for removing the heat-ray component, which is light on the long wavelength side in the emission spectrum of the halogen light. By removing the infrared light of 1200 nm or greater in wavelength as described above, it is possible to prevent the temperature increase in the solar cell panel to which the pseudo sunlight is illuminated. As understood from Fig. 8, the heat-ray cutting filter 18 is provided in parallel with the air mass filter 11. It is preferable that the heat-ray cutting filter 18 is provided between the air mass filter 11 and the halogen light source 8. In this way, the heat-ray cutting filter 18 reflects and reduces the heat-ray component in the halogen light so as to prevent the air mass filter 11 from being deteriorated by the heat-ray component.

However, it is difficult to remove the heat-ray component sufficiently by using the heat-ray cutting filter 18 only. Thus, it is preferable to use an absorber to the taper coupler 10 in addition to the heat-ray cutting filter 18. The heat-ray cutting filter 18 reduces the heat-ray component by reflecting the heat-ray component, but hardly absorbs the heat-ray component. The use of the absorber in addition to the heat-ray cutting filter 18 can prevent the heat-ray cutting filter 18 from being damaged by an increase in internal temperature gradient due to heat accumulation inside the filter. Moreover, a wavelength region (cut wavelength band) to be reflected out of near infrared light is not so large. Thus, it is possible to employ an optical multilayer or the like. Therefore, the heat-ray cutting filter 18 can be easily designed.

It should be noted that the present invention is not limited to the configuration of the pseudo sunlight emitting device 1 in which the number of the taper couplers 10 provided for one taper coupler 4 is two (hereinafter, the number of the taper couplers 10 per taper coupler 4 is referred to as "division number"). The division number may be 3 or more. The number of the halogen lamps, reflectors, air mass filters may be changed according to the division number. In order to control the directivity of the halogen light, it is preferable that the shape of the taper coupler 10 is substantially similar to that of the taper coupler 4, and that the surface area of the taper coupler 10 is substantially 1/2n of that of the taper coupler 10, where n is the division number and a natural number. For example, when the division number is three, the size of the taper coupler 10 is such that the width (minor-axis dimension) is 50 mm, the length (major-axis dimension) is 160 mm, and the taper angle is 7°, and the surface area of the taper coupler 10 is substantially 1/6 of that of the taper coupler 4.

The greater the division number, the smaller the size of the taper couplers 10, thereby being more effective to be cooled by the cooling effect of the cooling air. This prevents a linear temperature rise localized in the center section. The heating effect of the halogen light, which is enhanced by the increase in the number of times to turn on the light source, and the cooling effect of the cooling air can reach their substantial equilibrium at a lower temperature.

However, if the division number is excessively large, the distance between the taper couplers 10 and the halogen light source 8 becomes short so that the taper couplers 10 can be affected by the radiant heat from the halogen light. The radiant heat not only enhances the heating effect to the taper coupler 10, but also causes the heating effect to reach the air mass filter 11, thereby adversely affecting filter properties of the air mass filter 11. Thus, the division number should be decided in consideration of the lamp light amount, and the size of the taper couplers.

As illustrated in Figs. 1 and 2, the pseudo sunlight emitting device 1 of the present embodiment includes pairs of optical systems constituted by a light source, a reflector, a taper coupler, and an air mass filter: one is the xenon light optical system and the other is the halogen light optical system. More specifically, one of the paired optical systems is provided on one side (left-hand side in Fig. 2) in a housing of the pseudo sunlight emitting device 1 and the other one of the paired optical systems is provided on the other side (right-hand side in Fig. 2) in the housing of the pseudo sunlight emitting device 1. In conformity with this configuration, two light mixing sections 13 are provided. One of the light mixing sections 13 guides into one edge of the light guide section 14 the light coming from one of the paired optical systems. Meanwhile, the other one of the light mixing sections 13 guides into the other edge of the light guide section 14 the light coming from the other one of the paired optical systems. Thereby, the pseudo sunlight emitting device 1 can emit the pseudo sunlight with a greater intensity. Moreover, it is possible to design the respective optical systems such that they are constituted by lamps of different output light amounts, and air mass filters having different light transmittance. In this way, it is possible to individually adjust the illuminance of the light to be illuminated to the object to be illuminated. Thus, it can be easily perform to regulate illuminance unevenness of the light to be illuminated to the object to be illuminated.

Moreover, the pseudo sunlight emitting device 1 is illustrated as having a certain size along the depth direction (x-axis dimension) of Fig. 1, and 8 sets of the optical systems are arranged in along the depth direction. The pseudo sunlight emitting device 1 is not limited to this and may be configured with various number of sets of optical systems depending on how much area of the object provided on the illumination surface 15 the pseudo sunlight emitting device 1 should illuminate..

It should be clearly understood that the embodiments and examples described herein are illustrative only and are not intended to limit the scope of the invention. The scope of the invention is shown by the claims below but is not to be restricted by the Description above, and is intended to cover all such changes and modifications as fall within the scope of the claims and equivalents thereof.

### (Summary of Embodiments)

As described above, the pseudo sunlight emitting device according to the present invention, with the aforementioned configuration, is preferably configured such that the second light guide members have a shape similar to that of the first light guide member, and have a surface area that is substantially 1/2 of that of the first light guide member.

With this configuration, in case where the first light guide member having a tapered shape that its light incident surface is smaller than its light emission surface, the second light guide members can be such that the directivity of the light propagating inside the second light guide members can be controlled highly accurately.

Moreover, the pseudo sunlight emitting device according to the present invention, with the aforementioned configuration, is preferably configured to comprise: a cooling device of air cooling type for blowing cooling air to a surface of the second light guide member, the cooling device serving as heat release means for the second light guide members.

With this configuration, the pseudo sunlight emitting device according to the present invention can reduce the temperature rise in the second light guide members by cooling the second light guide members, which tend to be heated to a high temperature. Further, because the cooling device is of air cooling type, the cooling can be performed relatively easily and efficiently.

Moreover, the pseudo sunlight emitting device according to the present invention, with the aforementioned configuration, is preferably configured such that the second light guide members are made of a glass material capable of absorbing light of a certain wavelength.

With this configuration, the pseudo sunlight emitting device according to the present invention reduces the heat-ray component in the second light, thereby making it possible to prevent the object (e.g., solar cell panel) to be illuminated from being heated up to an unnecessarily high temperature.

Moreover, the pseudo sunlight emitting device according to the present invention, with the aforementioned configuration, is preferably configured to comprise: a third optical filter for reducing, by reflection, a heat-ray component in the second light of the second light source.

With this configuration, the pseudo sunlight emitting device according to the present invention can reduce heat-ray component that is unnecessary for the pseudo sunlight. Thereby, the pseudo sunlight emitting device according to the present invention can prevent the pseudo sunlight emitting device itself and the object such as a solar cell panel that the pseudo sunlight emitting device illuminates from being heated up to a high temperature.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

The present invention is applicable to inspections, measurements, and experiments of solar cells. Moreover, the present invention is also applicable to testing cosmetics, coating materials, adhesives, various materials on color deterioration and light resistance. Furthermore, the present invention is also applicable to inspection and experiments of optical catalysts, and to various other experiments having been carried out with natural light.

### Reference Signs List

- 1: Pseudo Sunlight Emitting Device
- 2: Xenon Light Source (First Light Source)
- 3: Reflector
- 4: Taper Coupler (First Light Guide Member)
- 5: Air Mass Filter (First Optical Filter)
- 8: Halogen Light Source (Second Light Source)
- 9: Reflector
- 10: Taper Coupler (Second Light Guide Member)
- 11: Air Mass Filter (Second Optical Filter)
- 13: Light Mixing Section (Wavelength Selective Mirror)
- 14: Light Guide Member
- 15: Illumination Surface
- 18: Heat-Ray Cutting Filter (Third Optical Filter)
- 21: Cooling Device
- 22: Blast Pipe
- 23: Air Distribution Aperture

## Claims

1. A pseudo sunlight emitting device, comprising:
a first light source for emitting first light having a certain spectral distribution;
a first light guide member for receiving, at its light incident surface, the first light from the first light source, and for emitting, via its light emission surface, light having a controlled directivity;
a first optical filter for adjusting a spectrum of the light emitted from the first light guide member;
a second light source for emitting second light whose accumulative irradiance in an infrared wavelength region is greater than an accumulative irradiance of a wavelength region of light shorter in wavelength than infrared light;
second light guide members for receiving, at their light incident surfaces, the second light from the second light source, and for emitting, via their light emission surfaces, light having a controlled directivity;
a second optical filter(s) for adjusting a spectrum of the light emitted from the second light guide member,
a number of the second light guide members being greater than that of the first light guide member by n times, where n is a natural number not less than 2.

2. The pseudo sunlight emitting device as set forth in claim 1, wherein the second light guide members have a shape similar to that of the first light guide member, and have a surface area that is substantially 1/2n of that of the first light guide member.

3. The pseudo sunlight emitting device as set forth in claim 1 or 2, comprising:
a cooling device of air cooling type for blowing cooling air to a surface of the second light guide member, the cooling device serving as heat release means for the second light guide members.

4. The pseudo sunlight emitting device as set forth in any one of claims 1 to 3, wherein the second light guide members are made of a glass material capable of absorbing light of a certain wavelength.

5. The pseudo sunlight emitting device as set forth in any one of claims 1 to 4, comprising:
a third optical filter for reducing, by reflection, a heat-ray component in the second light of the second light source.
